# EUROPEAN PATENT APPLICATION

(11) **EP 3 024 164 A1**
(43) Date of publication of application: **25.05.2016**
(21) Application number: 14826346.0
(22) Date of filing: 04.03.2014
(51) Int. Cl.: H04L 1/22

(54) **SWITCHING METHOD AND APPARATUS FOR MAIN AND STANDBY DEVICES**

(30) Priority: 18.07.2013 CN 201310300666
(71) Applicant: Huawei Technologies Co., Ltd., Longgang District Shenzhen, Guangdong 518129 (CN)
(72) Inventor: MIAO, Chenglin, Shenzhen Guangdong 518129 (CN); ZHANG, Qiang, Shenzhen Guangdong 518129 (CN); WEN, Shuangquan, Shenzhen Guangdong 518129 (CN); MENG, Fanlu, Shenzhen Guangdong 518129 (CN); CHEN, Wei, Shenzhen Guangdong 518129 (CN)
(74) Representative: Isarpatent
(86) International application number: PCT/CN2014/072842
(87) International publication number: WO 2015/007096

(57) **Abstract**

The present invention relates to a method and an apparatus for switching between a master device and a backup device. The method for switching between a master device and a backup device includes: when an access device accesses a network by using the master device, detecting an interface that is on the master device and directly connected to the access device or a transmission device, so as to determine whether a link between the access device and the master device fails; and when it is determined that the link between the access device and the master device fails, instructing a redundancy group with a routing function to perform switching between the master device and the backup device, so that the access device accesses the network by using the backup device that is before the switching.

## Description

This application claims priority to Chinese Patent Application No. 201310300666.4, filed with the Chinese Patent Office on July 18, 2013 and entitled "METHOD AND APPARATUS FOR SWITCHING BETWEEN MASTER DEVICE AND BACKUP DEVICE", which is incorporated herein by reference in its entirety.

### TECHNICAL FIELD

The present invention relates to the field of communications technologies, and in particular, to a method and an apparatus for switching between a master device and a backup device.

### BACKGROUND

Currently, a network is advancing rapidly. With rapid popularization and increasingly deep application of the network, value-added services of various types are widely deployed on the network, and a network bandwidth also grows exponentially. Short-time network interruption may affect a large quantity of services, causing a heavy loss. Therefore, reliability of an infrastructure network, which serves as a bearing body of a service also becomes a focus of increasing concern. The Virtual Router Redundancy Protocol (Virtual Router Redundancy Protocol, VRRP) is such a reliability technology that can implement redundancy backup of a network device, and improve reliability of the network.

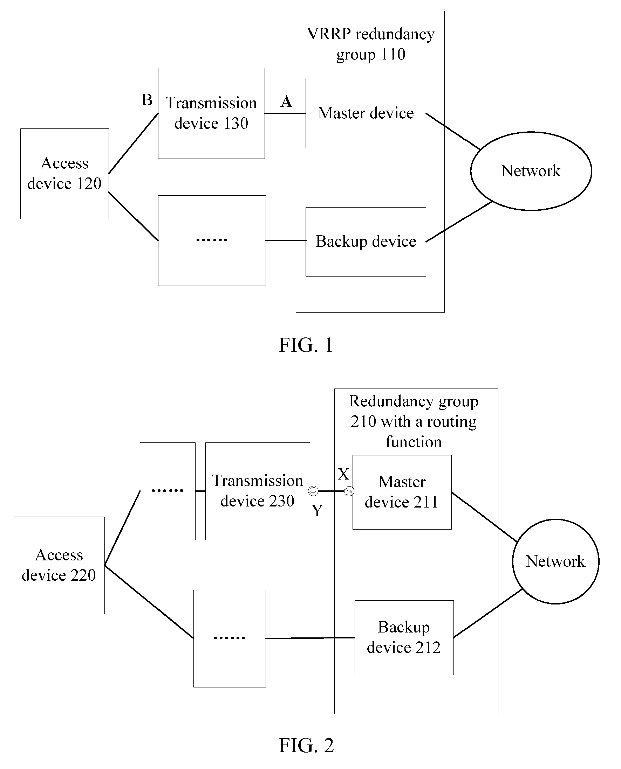

When the VRRP technology is used in a real network, as shown in FIG. 1, generally there may be one or more transmission devices 130 between a master device included in a VRRP redundancy group 110 and an access device 120. However, the VRRP redundancy group 110 can only perceive whether a link (that is, a link of section A in FIG. 1) between the transmission device 130 that is directly connected to the VRRP redundancy group 110 and the VRRP redundancy group 110 itself fails and perform switching between the master device and a backup device accordingly. When a link of another section (such as a link of section B in FIG. 1) fails, the VRRP redundancy group 110 cannot perceive the fault, that is, cannot perform switching between the master device and the backup device.

In the prior art, Ethernet-operation administration and maintenance (Ethernet-Operation Administration and Maintenance, ETH-OAM) may be deployed in all devices to resolve a problem that a VRRP redundancy group cannot perceive a fault of a link between two transmission devices. ETH-OAM configuration is relatively complex. If the quantity of access devices that access the VRRP redundancy group 110 through the transmission device 130 is relatively large, the quantity of the configuration is very large, and a relatively large number of OAM signaling also occupies normal bandwidth of a device. In addition, this method requires that all devices must support the ETH-OAM, and the devices must be seamlessly interconnected. If a device on a link does not support the ETH-OAM, the VRRP redundancy group cannot sense a problem of link faults between the access device 120 and the transmission device 130 or between two transmission devices. As a result, switching between a master device and a backup device cannot be implemented.

### SUMMARY

In view of this, the present invention provides a method and an apparatus for switching between an master device and a backup device, so that in a case in which any one of the device does not support ETH-OAM, a redundancy group with a routing function may also learn a fault of a link between the redundancy group with a routing function and an access device, thereby implementing switching between the master device and the backup device.

According to a first aspect, a method for switching between a master device and a backup device is provided, where the method is applied to a network including a redundancy group with a routing function and an access device; the redundancy group with a routing function includes a master device and a backup device; at least one transmission device is included between the master device and the access device; and the method includes:
when the access device accesses the network by using the master device, detecting an interface that is on the master device and directly connected to the transmission device, so as to determine whether a link between the access device and the master device fails; and
when it is determined that the link between the access device and the master device fails, triggering the redundancy group with a routing function to perform switching between the master device and the backup device, so that the access device backup that is before the switching accesses the network by using the backup device that is before the switching.

In a first possible implementation manner of the first aspect, the detecting an interface that is on the master device and directly connected to the transmission device, so as to determine whether a link between the access device and the master device fails is specifically: detecting whether service traffic volume passing through the interface that is on the master device and directly connected to the transmission device is not greater than a preset traffic threshold in a detection period; and if the service traffic volume passing through the interface that is on the master device and directly connected to the transmission device is not greater than the preset traffic threshold in the detection period, determining that the link between the access device and the master device fails.

With reference to the first aspect or the first possible implementation manner of the first aspect, in a second possible implementation manner, the redundancy group with a routing function is a Virtual Router Redundancy Protocol VRRP redundancy group.

With reference to the first aspect or the first possible implementation manner of the first aspect or the second possible implementation manner of the first aspect, in a third possible implementation manner, the transmission device is a router, or a switch, or a wavelength division multiplexing device, or a packet transport network device.

With reference to the first aspect or the first possible implementation manner of the first aspect or the second possible implementation manner of the first aspect or the third possible implementation manner of the first aspect, in a fourth possible implementation manner, the access device is a router, or a switch, or a digital subscriber line access multiplexer.

According to a second aspect, an apparatus for switching between a master device and a backup device is provided, where the apparatus is applied to a network including a redundancy group with a routing function and an access device; the redundancy group with a routing function includes a master device and a backup device; at least one transmission device is included between the master device and the access device; and the apparatus includes:
a detecting unit, configured to: when the access device accesses the network by using the master device, detect an interface that is on the master device and directly connected to the transmission device, so as to determine whether a link between the access device and the master device fails; and
a triggering unit, configured to: when it is determined that the link between the access device and the master device fails, trigger the redundancy group with a routing function to perform switching between the master device and the backup device, so that the access device accesses the network by using the backup device that is before the switching.

In a first possible implementation manner of the second aspect, the detecting unit is specifically configured to: detect whether a service traffic volume passing through the interface that is on the master device and directly connected to the transmission device is not greater than a preset traffic threshold in a detection period; and if the service traffic volume passing through the interface that is on the master device and directly connected to the transmission device is not greater than the preset traffic threshold in the detection period, determine that the link between the access device and the master device fails.

With reference to the second aspect or the first possible implementation manner of the second aspect, in a second possible implementation manner, the redundancy group with a routing function is a Virtual Router Redundancy Protocol VRRP redundancy group.

With reference to the second aspect or the first possible implementation manner of the second aspect or the second possible implementation manner of the second aspect, in a third possible implementation manner, the transmission device is a router, or a switch, or a wavelength division multiplexing device, or a packet transport network device.

With reference to the second aspect or the first possible implementation manner of the second aspect or the second possible implementation manner of the second aspect or the third possible implementation manner of the second aspect, in a fourth possible implementation manner, the access device is a router, or a switch, or a digital subscriber line access multiplexer.

According to a third aspect, a method for switching between a master device and a backup device is provided, where the method is applied to a network including a redundancy group with a routing function and an access device; the redundancy group with a routing function includes a master device and a backup device; and the method includes: when the access device accesses the network by using the master device, detecting an interface that is on the master device and directly connected to the access device, so as to determine whether a link between the access device and the master device fails; and when it is determined that the link between the access device and the master device fails, triggering the redundancy group with a routing function to perform switching between the master device and the backup device, so that the access device accesses the network by using the backup device that is before the switching.

In a first possible implementation manner of the third aspect, the detecting an interface that is on the master device and directly connected to the access device, so as to determine whether a link between the access device and the master device fails is specifically: detecting whether a service traffic volume passing through the interface that is on the master device and directly connected to the access device is not greater than a preset traffic threshold in a detection period; and if the service traffic volume passing through the interface that is on the master device and directly connected to the access device is not greater than the preset traffic threshold in the detection period, determining that the link between the access device and the master device fails.

With reference to the third aspect or the first possible implementation manner of the third aspect, in a second possible implementation manner, the redundancy group with a routing function is a Virtual Router Redundancy Protocol VRRP redundancy group.

By taking the foregoing solutions, an interface that is on a master device and directly connected to an access device or a transmission device is detected to determine whether a link between the access device and the master device fails, and then a redundancy group with a routing function is instructed to perform switching between the master device and a backup device, so that the access device accesses a network by using the backup device that is before the switching that is before the switching. In the method, complex network configuration is not required, and a redundancy group with a routing function can learn a fault of a link between two transmission devices or between a transmission device and an access device, thereby implementing switching between a master device and a backup device.

### BRIEF DESCRIPTION OF DRAWINGS

FIG. 1 is a schematic diagram of a networking structure including a VRRP redundancy group;
FIG. 2 is a schematic diagram of a networking structure including a redundancy group with a routing function;
FIG. 3 is a schematic flowchart of a method for switching between a master device and a backup device according to an embodiment of the present invention;
FIG. 4 is a schematic diagram of another networking structure including a VRRP redundancy group;
FIG. 5 is a schematic structural diagram of an apparatus for switching between a master device and a backup device according to an embodiment of the present invention; and
FIG. 6 is another schematic structural diagram of an apparatus for switching between a master device and a backup device according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person having ordinary skill in the art based on the embodiments of the present invention without creative efforts shall fall within the protection scope of the present invention.

First, an application scenario of a method for switching between a master device and a backup device according to the present invention is introduced. As shown in FIG. 2, in the scenario, a redundancy group 210 with a routing function includes a master device 211 and a backup device 212; and an access device 220 is connected to the master device 211 and the backup device 212 respectively. At least one transmission device 230 is included between the access device 220 and the master device 211, and one transmission device 230 or more transmission devices 230 in tandem connection are included between the access device 220 and the backup device 212. The access device 220 accesses a network via the one transmission device 230 or more transmission devices 230 in tandem connection and the master device 211. However, when a link between the access device 220 and the master device 211 fails, and the network cannot be accessed by using the master device 211, the redundancy group with a routing function performs switching between a master device and a backup device, so as to switch the master device 211 to a backup device and switch the backup device 212 to a master device, so that the access device accesses the network by using the backup device 212 that is before the switching. The redundancy group 210 with a routing function is specifically a VRRP redundancy group, and the VRRP redundancy group includes the master device 211 and the backup device 212. The access device 220 is specifically an access device such as a router, a switch, or a digital subscriber line access multiplexer (Digital Subscriber Line Access Multiplexer, DSLAM). The transmission device 230 is specifically a transmission device such as a router, a switch, a wavelength division multiplexing device, or a packet transport network device.

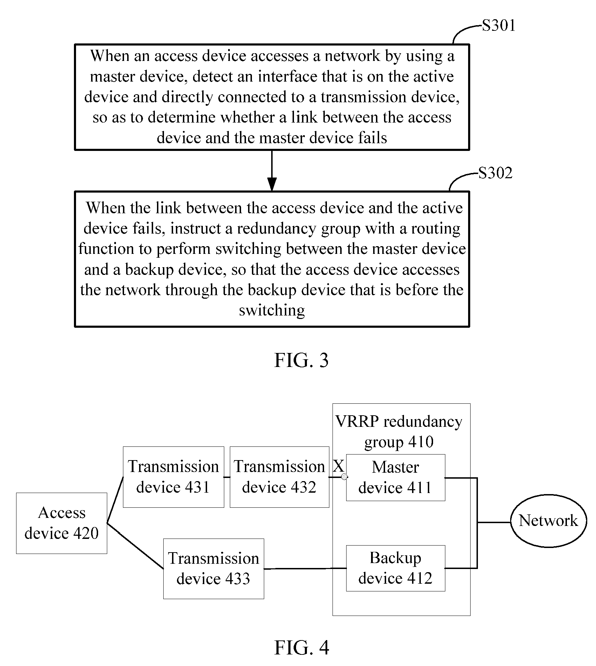

The following uses FIG. 3 as an example to describe in detail a method for switching between a master device and a backup device according to an embodiment of the present invention. FIG. 3 is a schematic flowchart of switching between a master device and a backup device according to an embodiment of the present invention. The method for switching between a master device and a backup device is applied to the scenario shown in FIG.1. It can be learned from FIG. 1 that one transmission device or more transmission devices in tandem connection are included between an access device and a master device that is included in a redundancy group with a routing function, and the redundancy group with a routing function further includes a backup device. The redundancy group with a routing function is specifically a VRRP redundancy group, and the access device is specifically a router, a switch, a digital subscriber line access multiplexer, or the like. The transmission device is specifically a router, a switch, a wavelength division multiplexing device, a packet transport network device, or the like.

As shown in FIG. 3, the method for switching between a master device and a backup device includes:
S301. When the access device accesses a network by using the master device, detect an interface that is on the master device and directly connected to the transmission device, so as to determine whether a link between the access device and the master device fails.

Optionally, it is detected whether a service traffic volume passing through the interface that is of the master device and directly connected to the transmission device is not greater than a preset traffic threshold in a detection period. If the service traffic volume passing through the interface that is of the master device and directly connected to the transmission device is greater than the preset traffic threshold in the detection period, it is determined that the link between the access device and the master device does not fail. The access device may continue to access the network by using the master device, and the redundancy group with a routing function does not need to perform switching between the master device and the backup device. If the service traffic volume passing through the interface that is of the master device and directly connected to the transmission device is not greater than the preset traffic threshold in a period, it is determined that the link between the access device and the master device fails, and S302 is performed.

For example, referring to FIG. 2, the access device 220 communicates with the redundancy group 210 with a routing function via the one or more transmission devices 230. The master device 211 of the redundancy group 210 with a routing function is directly connected to an interface Y of the transmission device 230 through its own interface X. It is detected whether the service traffic volume passing through the interface X is not greater than a preset traffic threshold in a detection period. If the service traffic volume passing through the interface X is greater than the preset traffic threshold in the detection period, it is determined that the link between the access device and the master device does not fail. The access device may continue to access the network by using the master device, and the redundancy group with a routing function does not need to perform switching between the master device and the backup device. If the service traffic volume passing through the interface X of the master device is not greater than the preset traffic threshold in the period, it is determined whether the link between the access device and the master device fails.

The traffic threshold may be determined according to statistical data of a service traffic volume when the link fails, or the traffic threshold may be directly set to 0. The detection period may be preset according to a requirement, for example, be set to 100 ms.

S302. When the link between the access device and the master device fails, trigger the redundancy group with a routing function to perform switching between the master device and the backup device, so that the access device accesses the network by using the backup device that is before the switching.

When the access device accesses the network by using the master device, if it is detected in a period that the service traffic volume of the interface that is of the master device and directly connected to the transmission device is not greater than a preset traffic threshold in the period, the redundancy group with a routing function is triggered to perform switching between the master device and the backup device, so as to switch the master device to a backup device and switch the backup device to a master device, so that the access device accesses the network by using the backup device that is before the switching, thereby ensuring that the access device may also normally access the network when the link between the access device and the master device that is before the switching fails.

Optionally, the method shown in FIG. 3 may be executed by a redundancy group with a routing function, or may be executed by a master device or a backup device that is included in a redundancy group with a routing function. The redundancy group with a routing function may include one master device and one or more backup devices. The redundancy group with a routing function may be a VRRP group; VRRP runs between two devices that form the redundancy group with a routing function.

In a specific example, as shown in FIG. 4, a VRRP redundancy group 410 includes a master device 411 and a backup device 412; and an access device 420 is connected to the master device 411 and the backup device 412 respectively. Two transmission devices 431 and 432 are included between the access device 420 and the master device 411, and one transmission device 433 is included between the access device 420 and the backup device 412. The transmission devices 431, 432, and 433 may be a switch, or another packet transport device, or a wavelength division multiplexing device.

When the access device 420 accesses a network through the master device 411 of the VRRP redundancy group 410, it is detected whether the service traffic volume passing through an interface X that is on the master device 411 and directly connected to the transmission device 432 is not greater than a preset traffic threshold in a detection period.

If the service traffic volume passing through the interface X of the master device 411 is greater than the preset traffic threshold in the detection period, it is determined that a link between the access device 420 and the master device 411 does not fail. The access device 420 may continue to access the network through the master device 411, and the VRRP redundancy group 410 does not need to perform switching between the master device and the backup device.

If the service traffic volume passing through the interface X on the master device 411 is not greater than the preset traffic threshold in the period, it is determined that the link between the access device 420 and the master device 411 fails, and the VRRP redundancy group 410 is triggered to perform switching between the master device and the backup device, so as to switch the master device to a backup device and switch the backup device to a master device, so that the access device 420 accesses the network by using the backup device 412 that is before the switching, thereby ensuring that the access device 420 may also normally access the network when the link between the access device 420 and the master device 411 that is before the switching fails.

The traffic threshold may be determined according to statistical data of the service traffic volume when the link fails, or the traffic threshold may be directly set to 0. The detection period may be preset according to a requirement, for example, be set to 100 ms.

It should be noted that the VRRP redundancy group in this example may be any redundancy group with a routing function; the access device 420 may be any access device; a switch 430 may be any transmission device; and one transmission device or more transmission devices in tandem connection are included between the access device and the master device or the backup device. Methods for switching between a master device and a backup device in the foregoing different scenarios are the same as that in this example, and details are not described herein again.

By taking the method for switching between a master device and a backup device according to this embodiment of the present invention, an interface that is of a master device in a redundancy group with a routing function and directly connected to a transmission device is detected to determine whether a link between an access device and the master device fails, and then the redundancy group with a routing function is instructed to perform switching between the master device and a backup device, so that the access device accesses a network by uses using the backup device that is before the switching. In the method, complex network configuration is not required and a redundancy group with a routing function can learn a fault of a link between two transmission devices or between a transmission device and an access device, thereby implementing switching between a master device and a backup device.

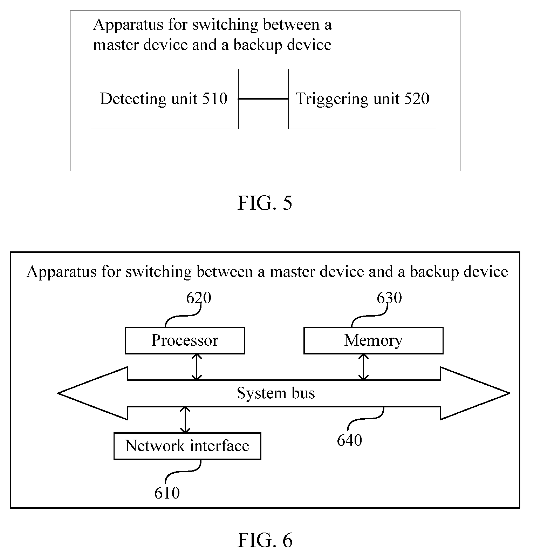

The following uses FIG. 5 as an example to describe in detail an apparatus for switching between a master device and a backup device according to an embodiment of the present invention. FIG. 5 is a structural diagram of an apparatus for switching between a master device and a backup device according to an embodiment of the present invention. The apparatus for switching between a master device and a backup device is applied to the redundancy group with a routing function, or the master device, or the backup device included in the redundancy group with a routing function in the scenario shown in FIG. 2. It can be learned from FIG. 2 that one transmission device or more transmission devices in tandem connection are included between an access device and a master device included in a redundancy group with a routing function, and the redundancy group with a routing function further includes a backup device. The redundancy group with a routing function is specifically a VRRP redundancy group; the access device may be specifically a router, a switch, a digital subscriber line access multiplexer, or the like; the transmission device is specifically a router, a switch, a wavelength division multiplexing device, a packet transport network device, or the like. The apparatus for switching between a master device and a backup device is used to implement the method for switching between a master device and a backup device shown in FIG. 3.

As shown in FIG. 5, the apparatus for switching between a master device and a backup device includes a detecting unit 510 and a triggering unit 520.

The detecting unit 510 is configured to: when the access device accesses a network by using the master device, detect an interface that is on the master device and directly connected to the transmission device, so as to determine whether a link between the access device and the master device fails.

Optionally, the detecting unit 510 detects whether a service traffic volume passing through the interface that is on the master device and directly connected to the access device or the transmission device is not greater than a preset traffic threshold in a detection period. If the service traffic volume passing through the interface that is on the master device and directly connected to the transmission device is greater than the preset traffic threshold in the detection period, it is determined that the link between the access device and the master device does not fail. The access device may continue to access the network by using the master device, and the redundancy group with a routing function does not need to perform switching between the master device and a backup device. If the service traffic volume passing through the interface that is on the master device and directly connected to the access device or the transmission device is not greater than the preset traffic threshold in the detection period, it is determined that the link between the access device and the master device fails.

The traffic threshold may be determined according to statistical data of the service traffic volume when the link fails, or the traffic threshold may be directly set to 0. The detection period may be preset according to a requirement, for example, be set to 100 ms.

The triggering unit 520 is configured to: when the link between the access device and the master device fails, trigger the redundancy group with a routing function to perform switching between the master device and a backup device, so that the access device accesses the network by using the backup device that is before the switching.

When the access device accesses the network by using the master device, if the detecting unit 510 detects in a period that the service traffic volume passing through the interface that is on the master device and directly connected to the transmission device is not greater than a preset traffic threshold in the period, the triggering unit 520 triggers the redundancy group with a routing function to perform switching between the master device and the backup device, so as to switch the master device to a backup device and switch the backup device to a master device, so that the access device accesses the network by using the backup device that is before the switching, thereby ensuring that the access device may also normally access the network when the link between the access device and the master device that is before the switching fails.

By using the apparatus for switching between a master device and a backup device according to this embodiment of the present invention, an interface that is on the master device and directly connected to an access device or a transmission device is detected to determine whether a link between the access device and the master device fails, and then a redundancy group with a routing function is instructed to perform switching between the master device and a backup device, so that the access device accesses a network by using the backup device that is before the switching. In the method, complex network configuration is not required and a redundancy group with a routing function can learn a fault of a link between two transmission devices or between a transmission device and an access device, thereby implementing switching between a master device and a backup device.

The foregoing apparatus for switching between a master device and a backup device may also be implemented in another manner. As shown in FIG. 6, FIG. 6 is another schematic structural diagram of an apparatus for switching between a master device and a backup device according to an embodiment of the present invention. The apparatus includes a network interface 610, a processor 620, and a memory 630. A system bus 640 is configured to connect the network interface 610, the processor 620, and the memory 630.

The network interface 610 is configured to connect to a network and communicate with another device.

The memory 630 may be a permanent memory such as a hard disk drive and a flash memory, and the memory 730 has a software module and a device driver. The software module can perform various functional modules in the foregoing methods of the present invention, and the device driver may be a network driver and an interface driver.

The apparatus is applied to the redundancy group with a routing function, or the master device or the backup device included in the redundancy group with a routing function in the scenario shown in FIG. 2. It can be learned from FIG. 2 that one transmission device or more transmission devices in tandem connection are included between an access device and a master device that is included in a redundancy group with a routing function, and the redundancy group with a routing function further includes a backup device.

When being started, these software components are loaded into the memory 630, and then accessed by the processor 620 and the processor 620 executes the following instructions:
when the access device accesses a network by using the master device, detecting an interface that is on the master device and directly connected to the transmission device, so as to determine whether a link between the access device and the master device fails; and
when it is determined that the link between the access device and the master device fails, instructing the redundancy group with a routing function to perform switching between the master device and the backup device, so that the access device accesses the network by using the backup device that is before the switching.

Further, the detecting an interface that is on the master device and directly connected to the access device or the transmission device, so as to determine whether a link between the access device and the master device fails is specifically:
detecting whether the service traffic volume passing through the interface that is on the master device and directly connected to the transmission device is not greater than a preset traffic threshold in a detection period; and if the service traffic volume of an interface that is between any two directly connected devices is not greater than the preset traffic threshold in the period, determining that the link between the access device and the master device fails.

Further, the redundancy group with a routing function is a Virtual Router Redundancy backup Protocol VRRP redundancy group.

Further, the transmission device is a router, a switch, a wavelength division multiplexing device, or a packet transport network device.

Further, the access device is a router, a switch, or a digital subscriber line access multiplexer.

Through the apparatus for switching between a master device and a backup device according to this embodiment of the present invention, an interface that is on the master device and directly connected to an access device or a transmission device is detected to determine whether a link between the access device and the master device fails, and then a redundancy group with a routing function is instructed to perform switching between the master device and a backup device, so that the access device accesses a network by using the backup device that is before the switching. In the method, complex network configuration is not required and a redundancy group with a routing function can learn a fault of a link between two transmission devices or between a transmission device and an access device, thereby implementing switching between a master device and a backup device.

The foregoing embodiments of the present invention may also be applied to a scenario in which an access device is directly connected to a redundancy group with a routing function. In this case, it is detected whether the service traffic volume of an interface that is on a master device of the redundancy group with a routing function and directly connected to the access device is not greater than a preset traffic threshold in a detection period. If the service traffic volume passing through the interface that is of the master device and directly connected to the access device is greater than the preset traffic threshold in the detection period, it is determined that a link between the access device and the master device does not fail. The access device may continue to access a network by using the master device, and the redundancy group with a routing function does not need to perform switching between the master device and a backup device. If the service traffic volume passing through the interface that is of the master device and directly connected to the access device is not greater than the preset traffic threshold in the period, it is determined that the link between the access device and the master device fails.

A person skilled in the art may be further aware that, in combination with the examples described in the embodiments disclosed in this specification, units and algorithms may be implemented by electronic hardware, computer software, or a combination thereof. To clearly describe the interchangeability between the hardware and the software, the foregoing has generally described compositions of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementation manners, the objective, technical solutions, and benefits of the present invention are further described in detail. It should be understood that the foregoing descriptions are merely specific implementation manners of the present invention, but are not intended to limit the protection scope of the present invention. Any modification, equivalent replacement, or improvement made without departing from the spirit and principle of the present invention shall fall within the protection scope of the present invention.

## Claims

1. A method for switching between a master device and a backup device, wherein the method is applied to a network comprising an access device a redundancy group with a routing function and an access device; the redundancy group with a routing function comprises a master device and a backup device; at least one transmission device is comprised between the master device and the access device; and the method comprises:
when the access device accesses the network by using the master device, detecting an interface that is on the master device and directly connected to the transmission device, so as to determine whether a link between the access device and the master device fails; and
when it is determined that the link between the access device and the master device fails, triggering the redundancy group with a routing function to perform switching between the master device and the backup device , so that the access device accesses the network by using the backup device that is before the switching.

2. The method according to claim 1, wherein the detecting an interface that is on the master device and directly connected to the transmission device, so as to determine whether a link between the access device and the master device fails is specifically:
detecting whether a service traffic volume passing through the interface that is on the master device and directly connected to the transmission device is not greater than a preset traffic threshold in a detection period; and
if the service traffic volume passing through the interface that is on the master device and directly connected to the transmission device is not greater than the preset traffic threshold in the detection period, determining that the link between the access device and the master device fails.

3. The method according to claim 1 or 2, wherein the redundancy group with a routing function is a Virtual Router Redundancy Protocol VRRP redundancy group.

4. The method according to any one of claims 1 to 3, wherein the transmission device is a router, or a switch, or a wavelength division device, or a packet transport network device.

5. The method according to any one of claims 1 to 4, wherein the access device is a router, or a switch, or a digital subscriber line access multiplexer.

6. An apparatus for switching between a master device and a backup device, wherein the apparatus is applied to a network comprising a redundancy group with a routing function and an access device; the redundancy group with a routing function comprises a master device and a backup device; at least one transmission device is comprised between the master device and the access device; and the apparatus comprises:
a detecting unit, configured to: when the access device accesses the network by using the master device, detect an interface that is on the master device and directly connected to the transmission device, so as to determine whether a link between the access device and the master device fails; and
a triggering unit, configured to: when it is determined that the link between the access device and the master device fails, trigger the redundancy group with a routing function to perform switching between the master device and the backup device, so that the access device accesses the network by using the backup device that is before the switching.

7. The apparatus according to claim 6, wherein the detecting unit is specifically configured to:
detect whether a service traffic volume passing through the interface that is on the master device and directly connected to the transmission device is not greater than a preset traffic threshold in a detection period; and
if the service traffic volume passing through the interface that is on the master device and directly connected to the transmission device is not greater than the preset traffic threshold in the detection period, determine that the link between the access device and the master device fails.

8. The apparatus according to claim 6 or 7, wherein the redundancy group with a routing function is a Virtual Router Redundancy Protocol VRRP redundancy group.

9. The apparatus according to any one of claims 6 to 8, wherein the transmission device is a router, or a switch, or a wavelength division multiplexing device, or a packet transport network device.

10. The apparatus according to any one of claims 6 to 9, wherein the access device is a router, or a switch, or a digital subscriber line access multiplexer.

11. A method for switching between a master device and a backup device, wherein the method is applied to a network comprising a redundancy group with a routing function and an access device; the redundancy group with a routing function comprises a master device and a backup device; and the method comprises:
when the access device accesses the network through the master device, detecting an interface that is on the master device and directly connected to the access device, so as to determine whether a link between the access device and the master device fails; and
when it is determined that the link between the access device and the master device fails, triggering the redundancy group with a routing function to perform switching between the master device and the backup device, so that the access device accesses the network by using the backup device that is before the switching.

12. The method according to claim 11, wherein the detecting an interface that is on the master device and directly connected to the access device, so as to determine whether a link between the access device and the master device fails is specifically:
detecting whether a service traffic volume passing through the interface that is on the master device and directly connected to the access device is not greater than a preset traffic threshold in a detection period; and
if the service traffic volume passing through the interface that is on the master device and directly connected to the access device is not greater than the preset traffic threshold in the detection period, determining that the link between the access device and the master device fails.

13. The method according to claim 11 or 12, wherein the redundancy group with a routing function is a Virtual Router Redundancy Protocol VRRP redundancy group.
